# EUROPEAN PATENT APPLICATION

(11) **EP 0 845 635 A2**
(43) Date of publication of application: **03.06.1998**
(21) Application number: 97309335.4
(22) Date of filing: 20.11.1997
(51) Int. Cl.: F23G 5/08, F23G 5/04, F23G 7/00

(54) **Waste water treating apparatus**

(30) Priority: 02.12.1996 KR 9645644; 02.08.1997 KR 9721385
(71) Applicant: Kim, Seung-Wook, Kyungki-do (KR)
(72) Inventor: Kim, Seung-Wook, Kyungki-do (KR)
(74) Representative: Woodward, John Calvin

(57) **Abstract**

A waste water treatment apparatus comprising a treater (10) with a burner (13) which evaporates waste water and burns sludge contained within the waste water, when the waste water is ejected into a combustion chamber (12) through nozzles (32). Combustible general waste is inserted into the combustion chamber (12) through an inlet opening (111). A supplier (20) supplies the waste water from a collecting tank to the treater (10). An ejector (30) ejects the waste water supplied from the supplier (20) to the treater (10), and a dust collector (40) is connected to exhaust outlet (113) in the treater (10), for collecting dust contained within exhaust gas ejected from the treater (10).

## Description

The present invention relates to a waste water treatment apparatus, and more particularly, but not exclusively, to an apparatus which can treat waste water containing printing ink which is generated from a printing factory, or waste water containing a variety of oils such as lubricating oil which may be generated from a factory.

Generally, in a printing factory all kinds of printing products are manufactured using water or oil based inks, and therefore waste water containing waste ink is generated. Further, even lubricating oil from the printing machines may be contained in the waste water.

To prevent pollution of the environment due to the discharge of waste water from a factory, a conventional apparatus is known which filters or purifies the ink or oil contained in the waste water by a filtering method using a filter, a sewage purification method, or a sedimenting method with chemicals. However, in this conventional apparatus using a filtering method, if the filter through which a variety of sludges such as waste ink particles, oil particles or the like is filtered is non-treated waste, the filtered waste water is restored to its original wasted water in the case where water is admixed to the waste filter. There is furthermore the inconvenience that the completely used filter has to be destroyed by fire.

Also, in a conventional apparatus using a sedimenting method with chemicals, there are problems in that the purification cost is increased due to the expensive chemical additives and the sediment has to be re-treated. Additionally, if the water treated with chemicals is directly discharged into a river, there is the problem that the river becomes contaminated because the treater water is short of the required biological oxygen demand (BOD).

If a factory illegally discharges waste water, it flows to general sewage or rivers and the soil or water quality deteriorates, which results in a serious destruction of the natural environment.

It is an object of the present invention to provide a waste water treatment apparatus which can prevent contamination of the natural environment due to factory waste water being free from the above mentioned problems.

Another object of the present invention is to provide a waste water treatment apparatus which can be installed in a small area with reduced installation and maintenance costs.

To achieve these and other objects according to a preferred embodiment of the present invention, there is provided a waste water treatment apparatus including: a treater which burns sludge such as waste printing ink, waste oil and the like contained in waste water and evaporates the waste water; a supplier which delivers the waste water from a collecting tank to the treater; and an ejector which ejects the waste water supplied from the supplier to a combustion chamber within the treater. With the preferred waste water treatment apparatus according to the present invention, since the sludge such as waste printing water or oil ink, lubricating oil, cutting oil and so on can be completely removed by burning it and the waste water is evaporated, a separate re-treatment process is not required and further a large installation area is therefore not needed.

The waste water treatment device can include a separator which electrically separates the sludge such as ink particles or oil particles contained in the waste water and a preheater which preheats the waste water before it is delivered to the treater.

If the waste water is supplied and ejected in the combustion chamber within the treater by the operation of the supplier and the ejector, the waste printing ink or waste oil contained in the waste water is destroyed by the flames of a burner mounted within the combustion chamber and the waste water is then evaporated. During the process, if the waste water is passed through the separator, the various kinds of sludge such as printing ink particles, waste oil particles and the like contained within the waste water are electrically separated from the waste water and directly placed in the combustion chamber. Next, since a low density of waste water from which the various kinds of sludge are filtered is delivered to the preheater and then preheated to be ejected within the combustion chamber, the printing ink particles or the waste oil particles are immediately burned and the water is rapidly evaporated, which results in a complete removal of the generation of environment contamination from the factory generated waste water.

The invention will now be described, by way of example only, with reference to the accompanying drawings, in which:
Figure 1 is a top view illustrating a waste water treatment apparatus constructed according to a first embodiment of the present invention;
Figure 2 is an enlarged sectional view illustrating the main parts of the apparatus of Figure 1;
Figure 3 is a partly sectional view illustrating schematically the treatment of waste water in an apparatus constructed according to a second embodiment of the present invention;
Figure 4 illustrates various operational states of some of the components of the apparatus of Figure 3;
Figure 5 is an enlarged plan view illustrating the separating tank of Figure 3; and
Figure 6 is a circuit diagram illustrating the operation of the separating tank of Figure 5.

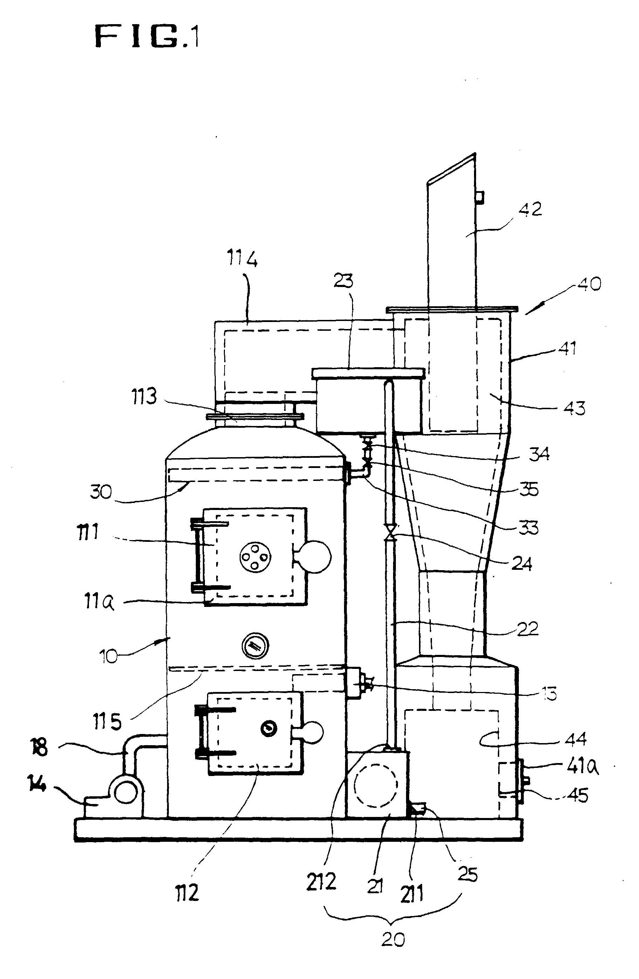

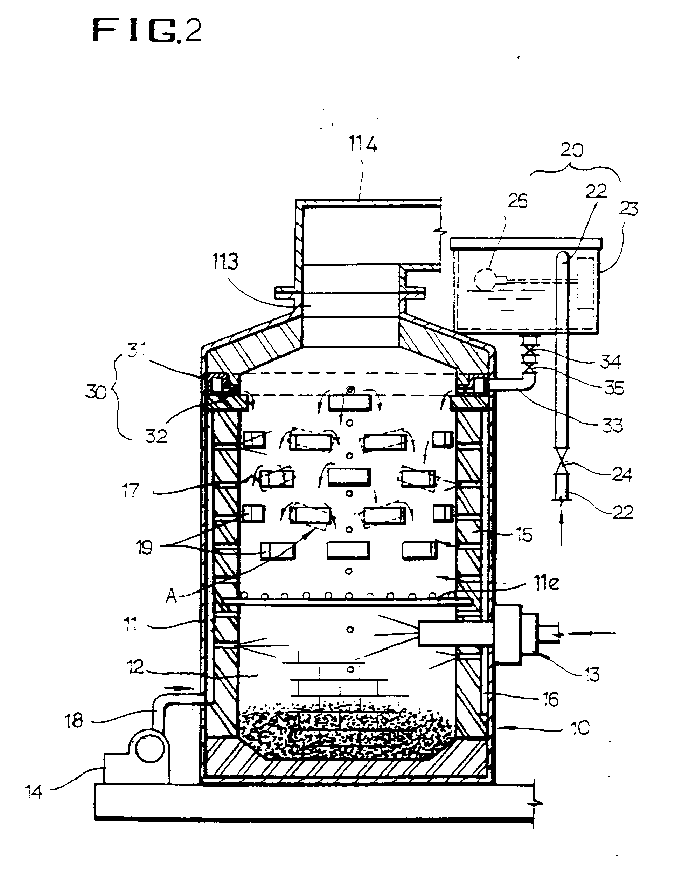

The construction and operation of a waste water treatment apparatus according to a first embodiment of the present invention will now be described in detail with reference to Figures 1 and 2.

Referring to Figures 1 and 2 there is shown a waste water treatment apparatus comprising a treater 10 which burns sludgy waste material containing printing ink, oil and the like and evaporates any water left thereafter. A supplier 20 supplies the waste water from a collecting tank to the treater 10 via an ejector 30 which ejects the waste water into the treater 10. A dust collector collects dust contained within exhaust gas ejected from the treater 10 to prevent dust particles being scattered outside the treater 10.

Preferably, the treater 10 comprises a gas cylinder 11 having a combustion chamber 12 therein, a burner 13 mounted on a lower side portion of the combustion chamber 12, and a blower 14 for supplying external air to the interior of the combustion chamber 12.

An admission port 111 with a door 11a is provided on the upper portion of the front surface of the gas cylinder 11, through which combustible general waste material can be inserted into the combustion chamber 12. An removal port 112 with a door 11b is provided in the lower portion of the front surface of the gas cylinder 11, through which burned ashes can be taken out of the combustion chamber 12. An exhaust port 113 is provided on the top end portion of the gas cylinder 11 for the removal of the combustion air.

The combustion chamber 12 is surrounded with a fire-resisting wall 15 which comprises fire-resistant bricks arranged on the inner peripheral surface of the gas cylinder 11. An air passage 16 is formed by leaving an appropriate interval between the fire-resisting wall 15 and the gas cylinder 11. A plurality of connecting holes 17 at appropriate intervals are provided on the fire-resistant wall 15 to connect the combustion chamber 12 with the air passage 16.

Pipe 18 connects blower 14 with the air passage 16.

When the blower 14 is operated, external air is supplied via the pipe 18 to the air passage 16 and flows into the combustion chamber 12 through the plurality of connecting holes. Thus, oxygen contained in the external air is fed to the combustion chamber 12 to facilitate the combustion therein.

A plurality of projections 19, made of fire-resistant brick and provided at intervals and protrude from the inner surface of the fire-resistant wall 15. When a part of the waste water ejected into the combustion chamber 12 flows along the inner surface of the fire-resistant wall 15, the waste water flows downwardly along a tortuous path over and between the guide projections 19, so that the waste water is widely distributed, while at the same time, its flow speed is reduced thereby improving the combustion and evaporation process in the combustion chamber 12.

The plurality of guide projections 19 preferably protrude horizontally but may be inclined at an appropriate angle, as shown by the dotted lines A in Figure 2.

The supplier 20 preferably comprises a pump 21, storage tank 23 into which the waste water is conveyed through pipe 22, and a check valve 24 which is mounted on the pipe 22 to prevent the waste water from flowing back.

An inlet 211 to the pump 21 is connected by means of pipe 25 to the waste water collecting tank (not shown), and exit hole 212 is connected to the pipe 22.

Referring now to Figure 1, float 26 connected to a switch (not shown) is mounted within the storage tank 23 to control storage of an appropriate amount of waste water therein. Thus, once the waste water to be stored in the storage tank 23 reaches the required level, the switch (not shown) connected to the float 26 is turned "off", and activation of the pump 21 stops. Alternatively, if the waste water falls below the proper level, the switch is turned "on" and the pump 21 operates to supply more waste water to the tank.

The ejector 30 preferably comprises receiving pipe bodies 31 which are mounted on the upper portion of the interior of the gas cylinder 11, and nozzles 32 are attached at appropriate intervals to the inner peripheral surfaces of the receiving pipe bodies 31, each of which has an inner end connected to the fire-resistant wall 15 and exposed to the combustion chamber 12. The receiving pipe bodies 31 are connected via a pipe 33 to the storage tank 23, and a check valve 34 and an adjusting valve 35 are each attached on the pipe 33.

The check valve 34 prevents any back-flow of waste water supplied to the receiving pipe bodies 31, and the adjusting valve 35 controls the flow rate of waste water supplied to the bodies 31.

A pump or a compressor (not shown) may be mounted in the supply pipe 33 to forcedly eject the waste water into the combustion chamber 12 through the nozzles 32.

Chimney 114 connects the upper side of gas cylinder 41 of the dust collector 40 with an exhaust port 113 in the gas cylinder 11, and an exhaust pipe 42 of a smaller diameter than the gas cylinder 41, is mounted centrally in the sealed upper end surface of the dust collector 40 and passes vertically therethrough.

Since the lower end of the exhaust pipe 42 is disposed at a lower position than the connected position ofthe chimney 114 and the gas cylinder 41, a circulating space 43 is formed between the inner peripheral surface of the upper portion of the gas cylinder 41 and the outer peripheral surface of the lower end portion of the exhaust pipe 42. As a result, since combustion air flowing into the upper portion of the gas cylinder 41 through the chimney 114 is circulated in the circulating space 43 and then passes through the lower end of the exhaust pipe 42 to be exhausted to the outside, any dust contained within the combustion air drops into the dust collecting chamber 44 formed in the lower portion of the gas cylinder 41.

Collected dust is removed via port 45 having an openable/closeable door 41a in the lower portion of the gas cylinder 41.

An explanation of an operation of the waste water treatment apparatus constructed according to the first embodiment shown in Figures 1 and 2 will now be given.

Firstly, the burner 13 of the treater 10 is ignited to heat the combustion chamber 12 up to an appropriate temperature, and then the pump 21 of the supplier 20 operates to supply waste water collected within the collecting tank (not shown) to the storage tank 23.

The door 11a in the gas cylinder 11 of the treater 10 is then opened and combustible waste materials such as paper, lumber and so on are inserted into the combustion chamber 12 through the aperture 111. These waste materials fall onto roaster 115 where they are burned by the burner 13.

As the interior of the combustion chamber 12 is maintained at the high temperature by the fire of the burner 13, general waste material can be well burned, even if the roaster 115 is not provided.

The blower 14 is then operated to supply external air to the air passage 16 through which it flows to each of the connecting holes 17, and is then supplied to the combustion chamber 12 to facilitate combustion.

If the adjusting valve 35 of the ejector 30 opens to supply waste water within the storage tank 23 to the receiving pipe bodies 31, the waste water is ejected into the combustion chamber 12 through the nozzles 32 attached to the inner peripheral surface of the receiving pipe bodies 31 under the force of the pump or compressor in a mist shape from the upper portion of the combustion chamber 12. Alternatively, if the waste water flows naturally, it flows along the inner surface of the fire-resistant wall 15.

Since the waste water flowing along the inner surface of the fire-resistant wall 15 follows a tortuous path due to the guide projections 19 which protrude from the inner surface of the fire-resistant wall 15, any waste printing ink or oil contained within the waste water is rapidly burned by the heated fire-resistant wall 15 and the burner 13 and any water remaining after the burning is finally evaporated.

The ashes generated during the combustion drop to the lower portion of the gas cylinder 11, and the evaporated steam travels to the dust collector 40 through the exhaust aperture 113 and the chimney 114, along with the exhaust gas.

The exhaust gas flowing to the upper portion of the dust collector 40 is circulated in the circulating space 43 and passes through the lower end of the exhaust pipe 42 to be exhausted to the outside through the exhaust pipe 42. During this step, dust contained within the exhaust gas drops into the dust collecting chamber 44 formed in the lower portion of the gas cylinder 41.

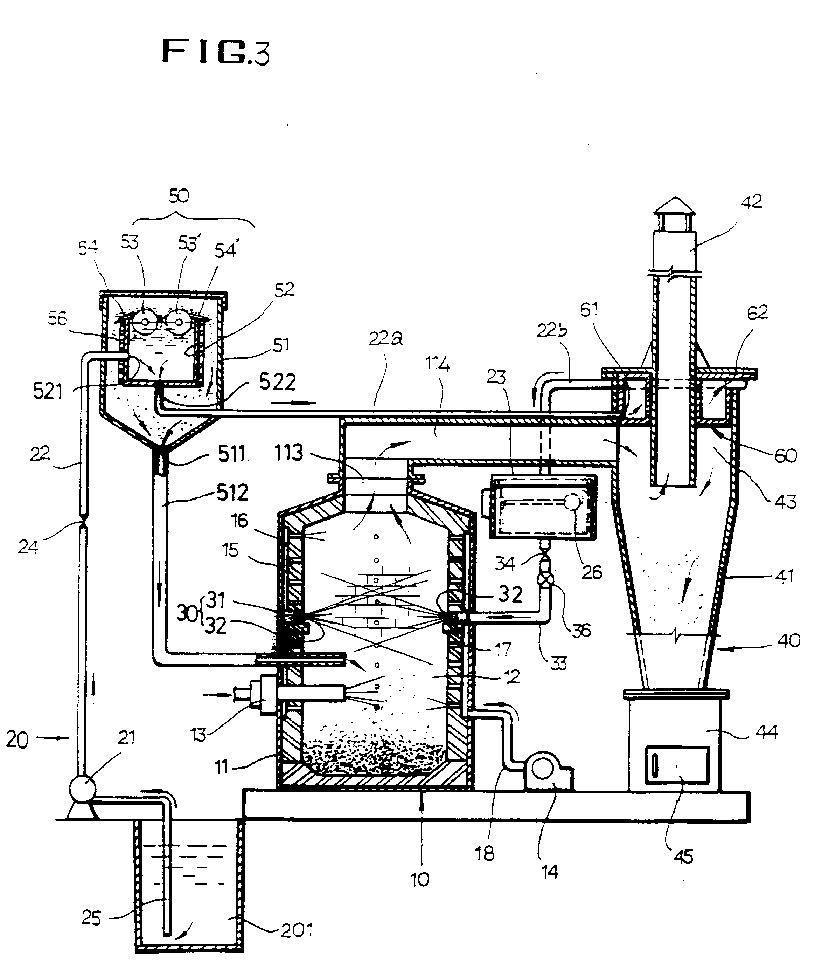

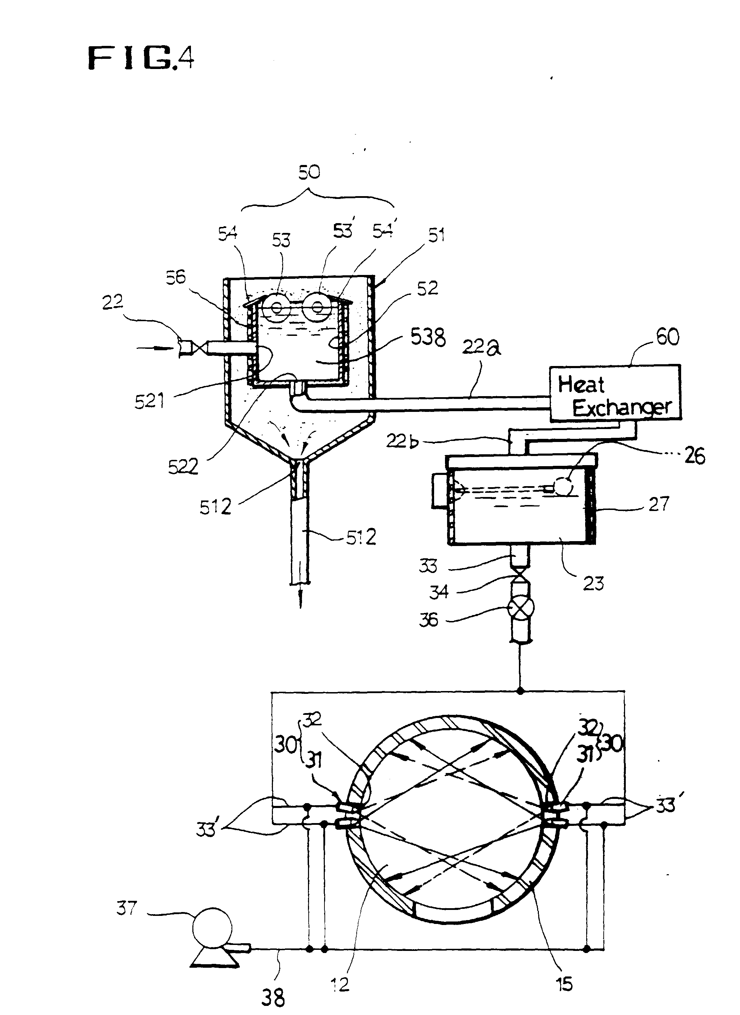

Figures 3 to 6 show a waste water treatment apparatus constructed according to a second embodiment of the present invention. In the same manner as the first embodiment, in this second embodiment there is provided a treater 10 which burns sludgy waste material such as waste containing printing ink, waste oil and so on and evaporates any remaining water. A supplier 20 supplies the waste water from a collecting tank 201 to the treater 10 via an ejector 30 which ejects the waste water into the treater 10. A dust collector 44 collects dust contained within exhaust gas leaving the treater 10 to prevent the dust particles from being scattered to the exterior of the treater 10.

The waste water treatment apparatus constructed according to this second embodiment includes a separator 50 which separates and collects sludge such as waste printing ink particles or oil particles contained in the waste water supplied to it from tank 201 and directly supplies the processed waste water to the ejector 30 in treater 10. A heat exchanger 60 fed by hot exhaust gas from the treater 10 preheats low density waste water from which the sludge has been removed and delivers it to the ejector 30.

Preferably, the separator 50 comprises a collecting tank 51 with a separating tank 52 mounted separately in it, separating rollers 53 and 53' rotatably mounted within the upper end portion of the separating tank 52, and blades 54 and 54' for scraping sludge attached to the separating rollers 53 and 53' which then drops into the collecting tank 51.

The bottom surface of the collecting tank 51 is downwardly tapered towards a central hole 511 connected by a pipe 512 to the upper side of the a burner 13 within the combustion chamber 12 of the treater 10.

Accordingly, sludge collected in the collecting tank 51 flows directly to the combustion chamber 12 through the pipe 512 where it is burned.

The separating tank 52 is smaller in size than the collecting tank 51 and has an inlet 521 at one side thereof which is connected by pipe 22 to the supplier 20. Outlet 522 in the bottom of the tank 52 is connected to heat exchanger 60 by pipe 22a and conveys low density waste water from the tank 52 to the heat exchanger 60.

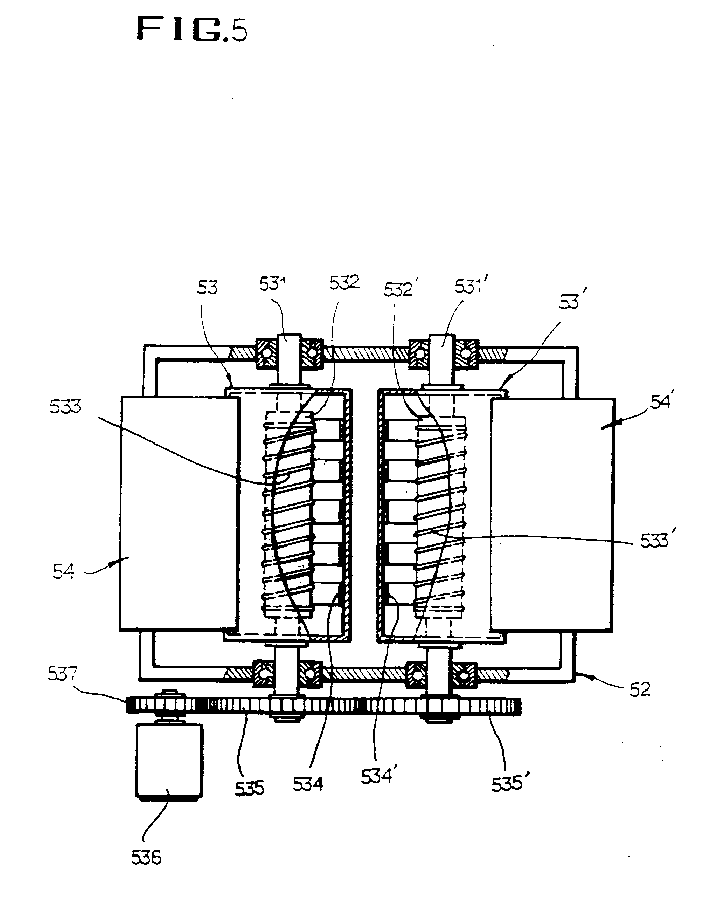

Figure 5 shows the separating rollers 53 and 53' which each has a cylindrical body with a cavity therein through which shafts 531 and 531' extend. Cores 532 and 532' are each attached to the shafts 531 and 531' and carbon brushes 534 and 534' are mounted at appropriate intervals on the inner peripheral surfaces ofthe separating rollers 53 and 53'.

The separating rollers 53 and 53' are rotatably mounted by means of the shafts 531 and 531' on the upper end portion of the separating tank 52 so that their lower portions are immersed in the waste water within the separating tank 52. Each one end of the shafts 531 and 531' engages with gears 535 and 535' and gear 535 engages with gear 537 mounted on a shaft of motor 536.

When the motor 536 is switched on, its driving force is transmitted by the gear 537 to the gears 535 and 535' to thereby rotate the separating rollers 53 and 53'.

Coil 533 is connected to a positive(+) terminal of bridge rectification circuit 55, and coil 533' is connected to a negative(-) terminal thereof.

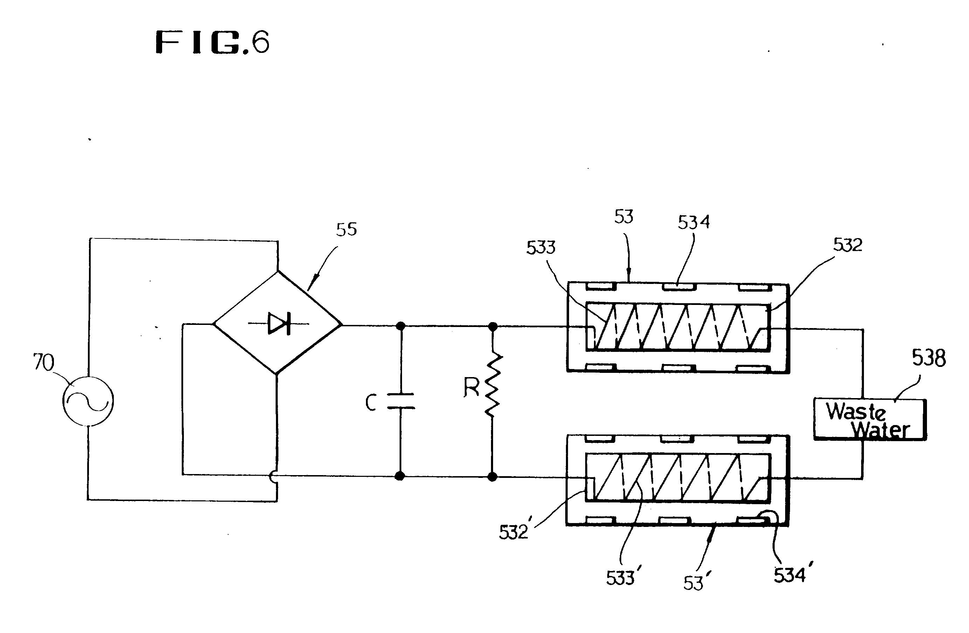

When an alternating current 70 is switched on, it is rectified by the bridge rectification circuit 55, and ripple components contained in the rectified alternating current power are smoothed out by a capacitor C and a resistor R and are then transmitted to each of the coils 533 and 533' (see Figure 6).

Since each of the coils 533 and 533' generates a magnetic force, the separating rollers 53 and 53' become an electromagnet, such that negative(-) particles of the sludge contained in the waste water 538 are attached to the separating roller 53 and positive(+) particles of the sludge are attached to the separating roller 53'.

The sludge contained in the waste water 538 within the separating tank 52 therefore attaches itself to the separating rollers 53 and 53' of the electromagnet, respectively so it is electrically separated from the waste water 538.

Referring again to Figure 5, the blades 54 and 54', which are mounted on the upper ends of both sides of the separating tank 52, have inner ends which are downwardly inclined and just touch the outer peripheral surfaces of the separating rollers 53 and 53'.

When the separating rollers 53 and 53' are rotated, any sludge attached to the outer peripheral surfaces thereof is scraped off by the inner ends of the blades 54 and 54' and passes through the upper surfaces of the blades 54 and 54' to drop into the collecting tank 51.

At the same time, since the sludge particles collected in the collecting tank 51 make it very liquid, it can be supplied from the tank 51 to the combustion chamber 12 via the outlet 511 and pipe 512.

The heat exchanger 60 which has a cylindrical body with an inlet 61 and an outlet 62, is mounted on the upper side portion within the circulating space 43 of the dust collector 40. The inlet 61 is connected to pipe 22a, and the outlet 62 is connected by pipe 22b to a storage tank 23 in which a float 26 is mounted. Low density waste water from which the sludge has been separated and removed is supplied from the separating tank 52 to the heat exchanger 60 where it absorbs heat from exhaust gas ejected into the dust collector 40 through chimney 114. The preheated waste water is then delivered to the storage tank 23 and fed into the combustion chamber 12 by the ejector 30.

In the second embodiment of the present invention, the low density waste water is delivered to the storage tank 23 through the heat exchanger 60, but may be delivered to the heat exchanger 60 through the separator 50 and the storage tank 23 and then preheated to be conveyed to the ejector 30 or may be delivered to the heat exchanger 60 through the storage tank 23 and the separator 50.

In addition, in the second embodiment, two ejectors 30 which face each other are provided on the intermediate portion of the gas cylinder 11 of the treater 10, each of which has a nozzle 32 having a crossed horizontal or upward ejecting direction.

A pump 36 is mounted in the supply pipe 33, and the waste water is ejected through each of nozzles 32 on operation of the pump 36.

Since the waste water is ejected in the form of a mist, the water is rapidly evaporated and the remaining sludge is well burned.

Because the ejected waste water crosses over and intersects, an eddy flow occurs. As a result, the waste water is widely distributed so combustion and evaporation is greatly improved in the burner 13 on the fire-resistant wall 15.

Furthermore, since the ejectors 30 are connected to the inner ends of branch pipes 33' arranged on the supply pipe 33, they are directly supplied with waste water by them. Accordingly, when compared with the first embodiment, in the second embodiment the installation of the receiving pipe bodies 31 need not be within the gas cylinder 11.

Pipe 38 supplies compressed air to each of the branch pipes 33' by means of compressor 37.

The use of compressed air prevents the branch pipes 33' which have a relative small exit aperture from becoming blocked and it also increases the ejecting force of the waste water through the nozzles 32. There is therefore no need to install the pump 36 on the supplying pipe 33, when using the compressor 37, and if installed, the pump 36 may be used with the compressor 37 or selectively used.

The compressor 37 need not be an integral part of the apparatus but can be installed elsewhere within the factory.

Heaters 27 and 56 are each installed in the storage tank 23 and the separating tank 52 to prevent them from freezing in the winter.

An explanation of the operation of the waste water treatment device shown in Figures 3-6 will now be given.

Firstly, the burner 13 of the treater 10 is ignited to heat the combustion chamber 12 up to an appropriate temperature, and simultaneously the door 11a is opened to allow combustible waste material to be poured through it into the combustion chamber 12. Then, the pump 21 of the supplier 20 is operated to convey the waste water collected within the collecting tank 201 to the separating tank 52 of the separator 50.

At the same time, the separating rollers 53 and 53' of the separator 50 are rotated by the motor 536, and power is supplied to the cores 532 and 532' and the coils 533 and 533' mounted in the separating rollers 53 and 53' to render them conductive. Since the separating roller 53 becomes an electromagnet having a positive(+) magnetic force and the separating roller 53' becomes an electromagnet having a negative(-) magnetic force, sludge contained within the waste water is electrically separated by the magnetic force thereof and becomes attached to the outer peripheral surfaces of the separating rollers 53 and 53'.

While the separating rollers 53 and 53' are continually rotated, the inner ends of the blades 54 and 54' in contact with the outer peripheral surface of the separating rollers 53 and 53', scrapes sludge attached on said outer peripheral surfaces and it passes through the upper surface thereof and drops into the collecting tank 51.

At the same time, the sludge separately collected from the waste water 538 is directly delivered to the combustion chamber 12 through the outlet 511 and pipe 512 in the bottom of the collecting tank 51 and is immediately burned by the high temperature of the flame in the burner 13.

The low density waste water from which the sludge particles have been separated and removed flows within the heat exchanger 60 through the outlet 522 and the pipe 22a.

Since the heat exchanger 60 is heated by the heat of the exhaust gas ejected into the interior of the dust collector 40 through the chimney 114 from the treater 10, the low density waste water within the heat exchanger 60 is pre-heated.

Next, the pre-heated waste water is delivered to the storage tank 23 through the outlet 62 and the pipe 22b, and the waste water in the storage tank 23 is delivered by pipe 31 to the ejector 30 and is ejected within the combustion chamber 12 through the nozzles 32.

Since the low density waste water is pre-heated within the heat exchanger 60, the water and the sludge remaining can be rapidly evaporated and burned within the combustion chamber 12.

In the second embodiment of the present invention, the waste water is delivered to the heat exchanger 60 through the separator 50, but may be delivered from the separator 50 to the ejector 30, not passing through the heat exchanger 60.

It should be noted that all operations of the first and second embodiments of the present invention are automatically controlled by a general automatic control apparatus (not shown).

It will be appreciated from the foregoing that a waste water treatment apparatus constructed according to the present invention can rapidly evaporate waste water containing oil, printing ink, or waste oil such as lubricating oil, cutting oil and so on in a treater where it completely destroys by fire sludge contained in the waste water thereby eliminating any environmental contamination problem caused due to the factory waste water.

In addition, a waste water treating device constructed according to the present invention can be simply installed in a small area and can readily destroy combustible wastes and sludge thereby reducing the fuel consumption cost of a burner. Moreover, a waste water treating device constructed according to the present invention can increase the amount of the waste water treated per unit of time thereby reducing the activation time thereof and decreasing installation and maintenance costs.

## Claims

1. Waste water treatment apparatus comprising a treater having a burner which evaporates waste water and burns sludge contained therein in a combustion chamber having an inlet to receive combustible general waste and an exhaust outlet from which combustion air is ejected, supply means for supplying waste water to said treater, ejector means for ejecting said waste water into said combustion chamber, and a dust collector for collecting dust contained within exhaust gas ejected from the treater.

2. Treatment apparatus as claimed in claim 1 wherein the supply means comprises a storage tank for storing the waste water which is fed to the treater by a pump, the tank having means therein operable to maintain the waste water therein at a predetermined level and to control the operation of said pump.

3. Treatment apparatus as claimed in claim 1 or claim 2 wherein said ejector means comprises a plurality of nozzles mounted around an upper side portion of said combustion chamber, said nozzles being attached at appropriate intervals on inner peripheral surfaces of receiving pipe bodies, the supply means and said receiving pipe bodies being connected by means of a supply pipe.

4. Treatment apparatus as claimed in claim 3 wherein the combustion chamber has an inner wall with projections therein which protrude into the interior thereof, said projections making waste water ejected through said nozzles move over the inner wall in a variety of directions.

5. Treatment apparatus as claimed in claim 1 wherein said ejector means is formed to provide nozzles facing each other on an intermediate portion of said combustion chamber, said nozzles each having an ejecting direction crossed horizontally or upwardly.

6. Treatment apparatus as claimed in claim 1 wherein said ejector means comprises a pair of nozzles provided in the upper and lower portions of the combustion chamber which face each nozzle having an ejecting direction crossed against each other and each of the pairs of ejectors being supplied with waste water by the supply means.

7. Treatment apparatus as claimed in claim 1 further comprising a separator installed between the supply means and ejector means for electrically separating sludge contained within the waste water to directly supply the sludge to said combustion chamber and for conveying a low density of waste water from which the sludge is separated and removed to said ejection means.

8. Treatment apparatus as claimed in claim 7 wherein said separator comprises a collecting tank which is connected to the combustion chamber, the separating tank being mounted separately within said collecting tank and connected to said supplier means on one side surface thereof and to a low density of waste water conveying pipe on a bottom surface thereof, separating rollers rotatably mounted in said separating tank and partially submerged in the waste water therein, said separating rollers operable when an electric current is supplied to them to attract sludge contained within the waste water, scraper means being mounted adjacent the rollers to scrape sludge attracted thereto which drops into a collecting tank.

9. Treatment apparatus as claimed in claim 1 further comprising a heat exchanger installed between the supply means and ejector means to preheat waste water conveyed from said supplier means before it reaches the ejector means.

10. Treatment apparatus as claimed in claim 9 wherein said heat exchanger is a cylindrical body having an inlet and an outlet and is installed within an upper portion of the dust collector.

11. Treatment apparatus as claimed in claim 1 further comprising a separator installed between said supplier means and said ejector means for electrically separating sludge contained within the waste water to directly supply the sludge to said combustion chamber of said treater and for conveying a low density of waste water from which the sludge is separated and removed to said ejector means, if the waste water conveyed to said ejector by said supplier flows, and a heat exchanger installed between said supplier and said ejector, for pre-heating the waste water conveyed from said supplier with the exhaust gas ejected through said dust collector to the outside and for preheating the waste water to convey the preheated waste water to said ejector.
